# EUROPEAN PATENT SPECIFICATION

(11) **EP 4 470 846 B1**
(45) Date of publication and mention of the grant of the patent: **24.12.2025**
(21) Application number: 24176262.4
(22) Date of filing: 16.05.2024
(51) Int. Cl.: B60R 19/56

(54) **UNDERRIDE GUARD FOR VEHICLES**
UNTERFAHRSCHUTZ FÜR FAHRZEUGE
DISPOSITIF ANTI-ENCASTREMENT POUR VÉHICULES

(30) Priority: 30.05.2023 IT 202300010962
(43) Date of publication of application: 04.12.2024
(73) Proprietor: Takler S.r.l., 70022 Altamura (BA) (IT)
(72) Inventor: BUCCOLIERI, Andrea, I-70022 Altamura, BARI (IT); GRECO, Luca, I-70022 Altamura, BARI (IT)
(74) Representative: Mitola, Marco

(56) References cited:
- EP-A1- 3 323 681
- EP-B1- 1 900 575
- FR-A1- 3 017 578
- US-B2- 9 694 776

## Description

### FIELD OF APPLICATION

The present invention relates to an underride guard for vehicles, in particular for industrial vehicles, such as trucks, tractor-trailers, vans, rigs, trailers, semitrailers, motorhomes, caravans and so on.

### BACKGROUND ART

Various solutions of underride guards exist in the prior art and have function of preventing a cycle from inadvertently inserting itself between the front axle and the rear axle of the industrial vehicle provided with said device.

Indeed, industrial vehicles are normally provided with front and rear axles that are quite far apart along the longitudinal or forward direction of the vehicle. Moreover, industrial vehicles are provided with large-diameter wheels, whereby the cantilevered portion between said front and rear axles is also high as well as long and can thus be dangerously engaged by a cycle straddling said axles while traveling on the road.

In order to prevent the occurrence of said highly dangerous situation, it is known to equip industrial vehicles with said underride guards, which substantially consist of one or more longitudinal crossmembers that effectively prevent access to the cantilevered portion between said front and rear axles.

Said longitudinal crossmembers must be strong enough not to collapse in case of a side impact; in this respect, there are specific safety regulations.

While the vehicle is traveling, the longitudinal crossmembers must always be arranged in a lowered, fixed position to prevent possible access to said cantilevered portion. On the other hand, when the vehicle is parked, the user may need to remove or rather raise the underride guard, for example to perform maintenance operations on the vehicle. Therefore, the known solutions include hinging mechanisms to fixed parts, anchored to the vehicle frame, as well as devices for locking the underride guard in the raised and lowered positions. In particular, the known solutions involve the use of safety pins or retainers, which are simply inserted into two holes, appropriately aligned with each other, arranged on a fixed part, anchored to the vehicle frame, and on the movable partition, respectively.

Such known solutions are not free from drawbacks and limitations.

Indeed, the safety pin must first be fixed to the frame, and extracted and inserted into appropriate holes each time. In order to be easily fitted, the safety pin must also have a small clearance with respect to the corresponding holes in which it is inserted: therefore, the known devices are always subject to small vibrations while the vehicle is traveling, which generate annoying noises.

Moreover, the known solutions with pins are rather inconvenient for the user, especially if the cantilevered portion and thus the underride guard are particularly long.

Indeed, under such conditions, the underride guard is doubly locked at the opposite longitudinal ends thereof: therefore, the user will have to remove and insert the corresponding safety retainers twice, at each end. This operation is particularly inconvenient considering that, if the underride guard extends longitudinally, it will be heavy to lift and will tend to bend along the longitudinal extension thereof, making the uncoupling and coupling operation particularly inconvenient, unless the user gets help (which is quite unlikely).

EP 3 323 681 A1 discloses an underride guard according to the preamble of claim 1.

### OVERVIEW OF THE INVENTION

Therefore, the need to solve the drawbacks and limitations mentioned above with reference to the prior art is felt.

Such a need is met by an underride guard for vehicles according to claim 1.

### DESCRIPTION OF THE DRAWINGS

Further features and advantages of the present invention will be more comprehensible from the following description of preferred embodiments thereof, given by way of non-limiting examples, in which:

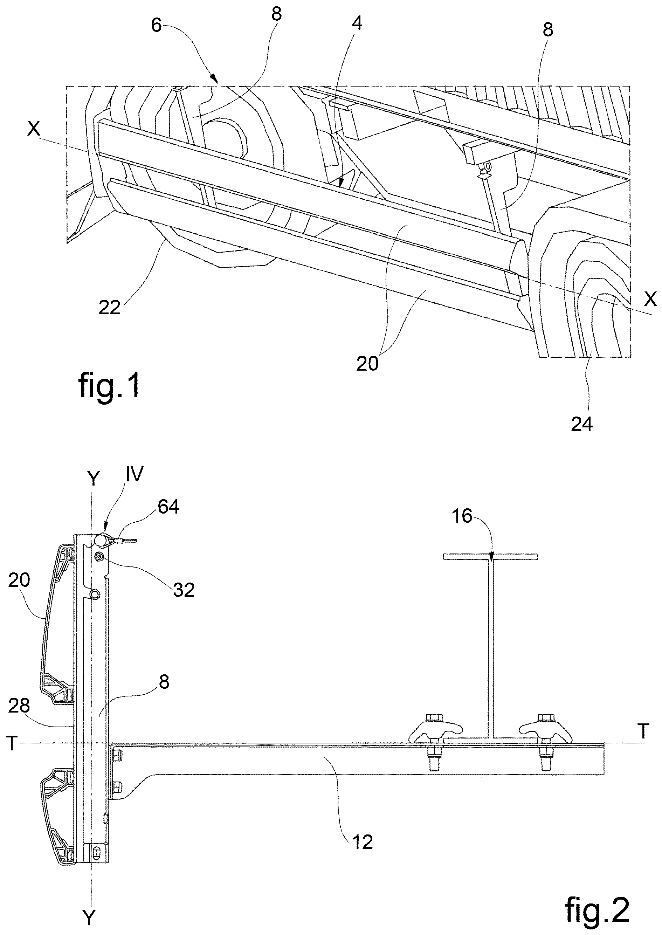

figure 1 is a perspective view, in a closed configuration, of an underride guard mounted to an industrial vehicle, according to an embodiment of the present invention;
figure 2 is a side view, in the configuration of use, of the underride guard in figure 1;

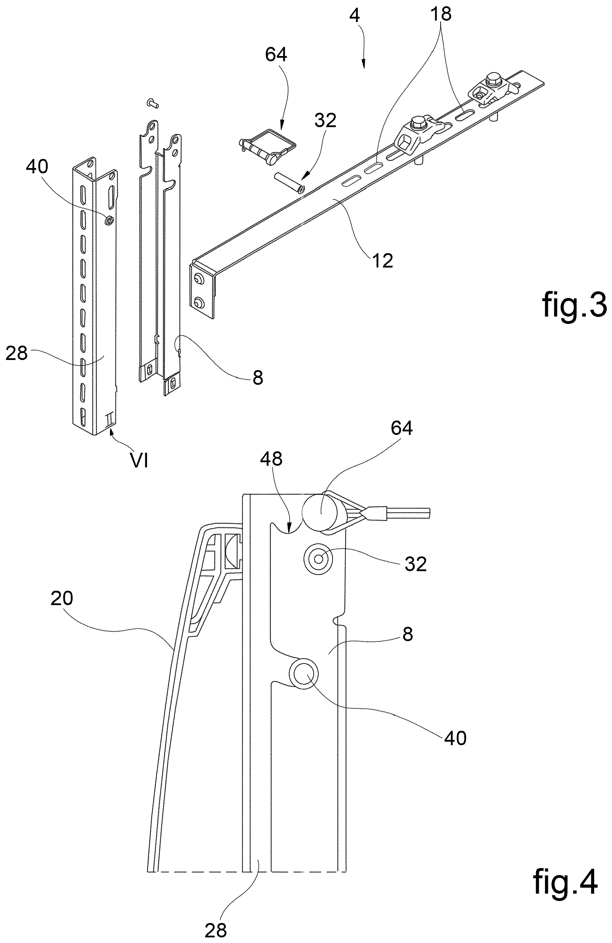

figure 3 is a partial view of the underride guard in figure 1 with separated parts;
figure 4 is a side view of the enlarged detail IV indicated in figure 2;

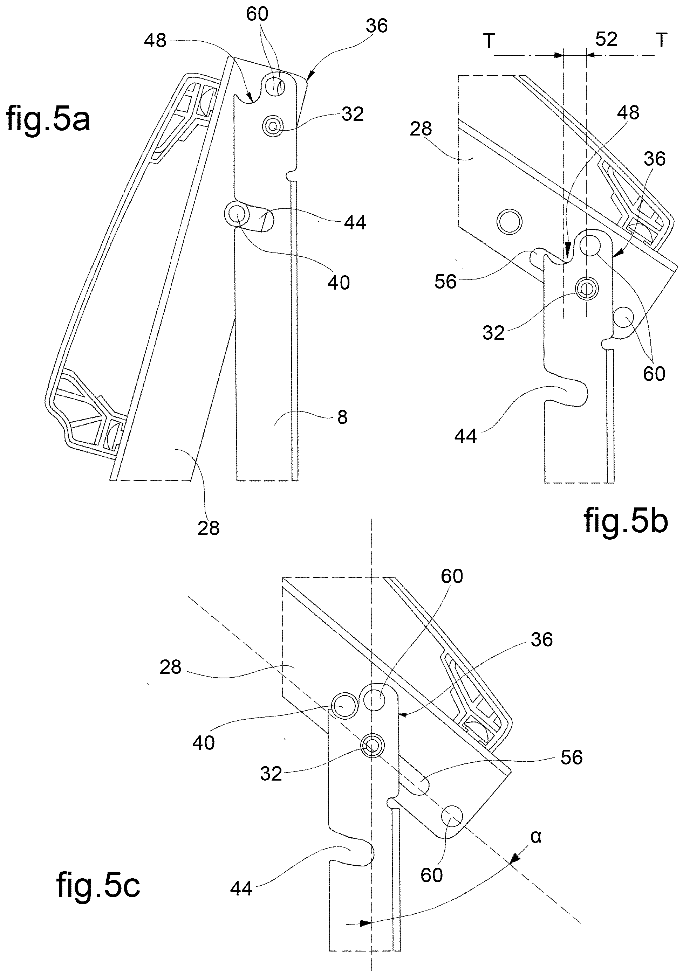

figures 5a, 5b, 5c are side views of the subsequent steps of opening the underride guard in figure 1;
figure 6 is a perspective view of the enlarged detail VI indicated in figure 3;
figures 7-8 are perspective views, from different angles, of the enlarged detail VII indicated in figure 3;
figure 9 shows a step of closing an underride guard, according to a further embodiment of the present invention.

The elements or parts of elements common to the embodiments described below will be indicated using the same reference numerals.

### DETAILED DESCRIPTION

With reference to the aforementioned figures, reference numeral 4 indicates as a whole an underride guard for vehicles 6 according to the present invention.

The underride guard 4 comprises at least one upright 8 and, preferably, a pair of uprights 8, directed along a vertical direction Y-Y, each upright 8 being provided with at least one bracket 12 for the connection with a frame 16 of an associable vehicle 6.

In particular, said uprights 8 are mutually spaced apart along a longitudinal direction X-X, perpendicular to said vertical direction Y-Y.

It is also possible to provide the underride guard 4 connected to the frame 16 of the vehicle 6 by means of three or more uprights; in general, the number of uprights 8 depends on the longitudinal length of the underride guard 4.

The underride guard 4 further comprises a partition 20 extending parallel to said longitudinal direction X-X, cantilevered between said pair of uprights 8.

The partition typically comprises a hollow or honeycomb structure, e.g., made of metal and/or plastic material.

According to an embodiment, the bracket 12 for the connection with the frame 16 comprises a plurality of adjustment holes or slots 18 for varying the position of the partition 20 with respect to the frame 16 in the vertical direction Y-Y and/or in the transverse direction T-T, perpendicular to the longitudinal direction X-X and the vertical direction Y-Y.

The partition 20 has the function of preventing a cycle from accessing the cantilevered portion between a pair of axles 22,24 of the vehicle 6.

Therefore, the partition is sized and shaped, according to regulations, so as to receive an impact from a potential cycle and not deform and/or cause damage to the cycle driver, in a known manner.

For example, the partition 20 is a chamfered or rounded box-like element.

The partition 20 is provided, at each upright 8, with a vertical leg 28 hinged to the corresponding upright 8 by means of an upper pin 32, arranged at an upper end 36 of the upright 8 itself.

The partition 20 is rotatable from a use or lowered configuration, in which each vertical leg 28 at least partially overlaps and is parallel to the corresponding upright 8, to a non-use or raised configuration, in which each vertical leg 28 identifies, with the corresponding upright, an angle α greater than 90°.

Moreover, each vertical leg 28 is provided with a peg 40 parallel to said longitudinal direction X-X and each upright 8 is provided with a lower slot 44 and an upper recess 48 arranged opposite to the lower slot 44 with respect to the upper pin 32.

The lower slot 44 has an arc-of-a-circle shape with respect to the upper pin 32 and is sized so as to accommodate said peg 40 and form an end-of-stroke for the rotation of the partition 20 in the lowered configuration.

The upper recess 48 is sized so as to form a stop of the peg 40 in the raised configuration of the partition 20.

Preferably, the upper recess 48 is misaligned by an eccentricity 52 with respect to the upper pin 32 along a transverse direction T-T, perpendicular to the longitudinal direction X-X and the vertical direction Y-Y, approaching the partition 20.

According to an embodiment, the upper recess 48 is arranged above the upper pin 32, along said vertical direction Y-Y.

According to an embodiment, the upper pin 32 is fastened on the respective upright 8 and is engaged on an upper slot 56 obtained on the corresponding vertical leg 28 so as to allow a relative movement between the partition 20 and the uprights 8, along said upper slot 56.

According to an embodiment, the upright 8 and the vertical leg 28 have a pair of locking holes 60 which are aligned in the use or lowered configuration; preferably a safety pin 64 is provided, which engages both locking holes 60 so as to ensure the locking of the partition 20 in the lowered configuration (typically while the vehicle is traveling).

Preferably, the vertical leg 28 and the upright 8, at mutual lower ends 68, have snap coupling means 72, which are engaged when the partition 20 is in the use or lowered position.

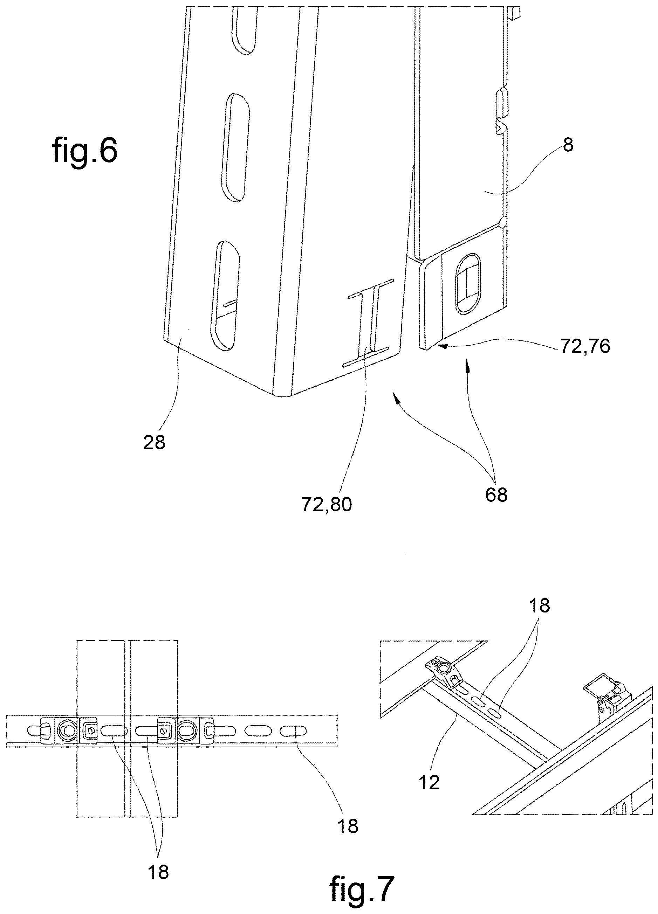

According to an embodiment (figure 6), said snap coupling means 72 comprise a flexible tab 76 and a slit 80 adapted to receive said flexible tab 76 in a coupling manner.

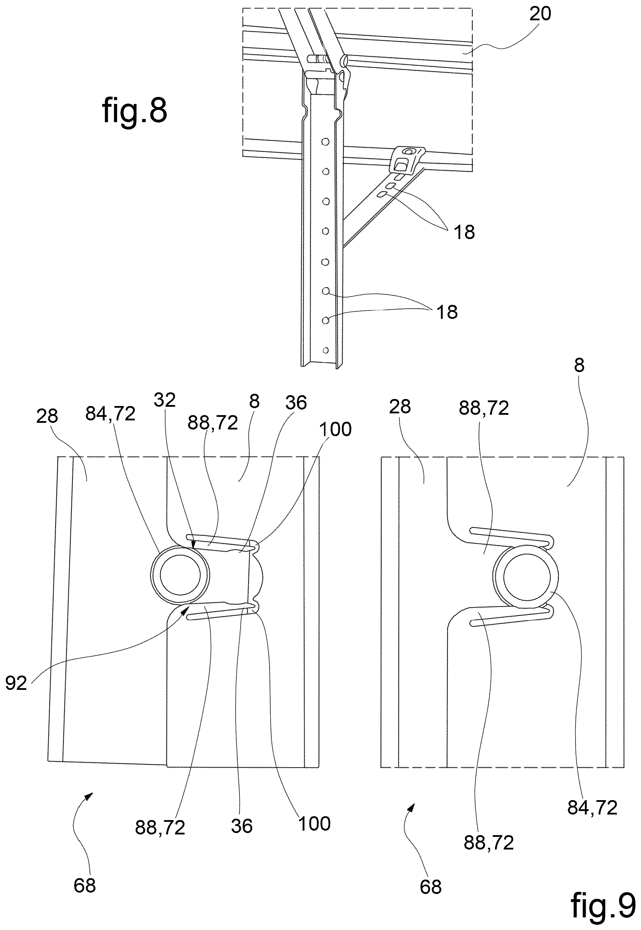

According to a further possible embodiment (figure 9), said snap coupling means 72 comprise a leg 84 and at least one pair of flexible flaps 88 configured to achieve a snap coupling with an outer side wall of said leg 84.

For example, said flexible flaps 88 comprise a lead-in portion 92 having a smaller width and a stop portion 96 having a greater width, which are mutually contiguous.

For example, said flexible flaps 88 each have a rear notch or slit 100 on the side opposite to the associable leg 84, to increase the flexibility thereof.

The operation of an underride guard according to the present invention will now be described.

In particular, the underride guard 4 is initially in the lowered position, whereby the upright 8 and the vertical leg 28 are substantially overlapped and mutually aligned (therefore, the angle α is zero). In such a configuration, the safety pin 64 can or cannot be provided inside the respective locking holes 60.

Regardless of the safety pin 60, if any, the snap coupling means 72 are mutually engaged; they can include both the flexible tab 76 engaged in the corresponding slot 80 and the flexible flaps 88 engaged on the leg 84.

The operator lifts the partition 20 by imposing an upward rotation around the upper pins 32. The peg 40 thus rotates out of the lower slot 44 and moves to a raised position until it rests against the upper recess 48. In this position, the partition 20 is stable in the raised position.

Such a movement is also allowed by the relative sliding of upper pin 32 with respect to upper slot 56.

The aforesaid sequence is reversed to return the partition to the lowered position, taking care to initially disengage the peg 40 from the upper recess 48 by slightly retracting the vertical leg 28 with respect to the upper pin 32 by virtue of the sliding of said upper pin 32 along the upper slot 56.

As can be appreciated from the above description, the present invention allows overcoming the drawbacks presented in the prior art.

In particular, the underride guard is particularly easy to unlock and lock; in particular, the underride guard, although of extensive longitudinal dimensions, can be moved easily by a single operator.

At the same time, the underride guard is locked and unlocked securely at all times, with no risk of vibration or noise while the vehicle is traveling.

In particular, the snap coupling means prevent the occurrence of vibration while the vehicle is traveling.

Moreover, the closed or locked condition is advantageously accompanied by a typical "click" which assures the user that he/she has correctly placed the partition back to the rest position. The user is thus always guaranteed to have properly locked the partition, even without the need to use the typical safety pin of the prior art solutions.

Those skilled in the art may make several changes and variations to the solutions described above.

The scope of protection of the invention is defined by the following claims.

## Claims

1. An underride guard (4) comprising:
- a pair of uprights (8), directed along a vertical direction (Y-Y), each upright (8) being provided with at least one bracket (12) for the connection with a frame (16) of an associable vehicle (6), said uprights (8) being mutually spaced apart in a longitudinal direction (X-X), perpendicular to said vertical direction (Y-Y),
- a partition (20) extending parallel to said longitudinal direction (X-X), cantilevered between said pair of uprights (8), the partition (20) being provided, at each upright (8), with a vertical leg (28) hinged to the corresponding upright (8) by means of an upper pin (32), at an upper end (36) of the upright (8) itself,
- the partition (20) being rotatable from a use or lowered configuration, in which each vertical leg (28) at least partially overlaps and is parallel to the corresponding upright (8), to a non-use or raised configuration, in which each vertical leg (28) identifies, with the corresponding upright (8), an angle (α) greater than 90°,
- wherein each vertical leg (28) is provided with a peg (40) parallel to said longitudinal direction (X-X)
, **characterized in that** each upright (8) is provided with a lower slot (44) and an upper recess (48) arranged opposite to the lower slot (44) with respect to the upper pin (32),
- wherein the lower slot (44) has an arc-of-a-circle shape with respect to the upper pin (32) and is sized so as to accommodate said peg (40) and form an end-of-stroke for the rotation of the partition (20) in the lowered configuration,
- wherein the upper recess (48) is sized so as to form a stop of the peg (40) in the raised configuration of the partition (20),
wherein the vertical leg (28) and the upright (8), at mutual lower ends (68), have snap coupling means (72) which are engaged when the partition (20) is in the use or lowered position.

2. An underride guard (4) according to claim 1, wherein the upper recess (48) is misaligned by an eccentricity with respect to the upper pin (32) along a transverse direction (T-T), perpendicular to the longitudinal direction (X-X) and the vertical direction (Y-Y), approaching the partition (20).

3. An underride guard (4) according to claim 1 or 2, wherein the upper recess (48) is arranged above the upper pin (32), along said vertical direction (Y-Y).

4. An underride guard (4) according to claim 1, 2 or 3, wherein the upper pin (32) is fastened on the respective upright (8) and is engaged on an upper slot (56) obtained on the corresponding vertical leg (28) so as to allow a relative movement between the partition (20) and the uprights (8), along said upper slot (56).

5. An underride guard (4) according to any one of claims 1 to 4, wherein said snap coupling means (72) comprise a flexible tab (76) and a slit (80) adapted to receive said flexible tab (76) in a coupling manner.

6. An underride guard (4) according to any one of claims 1 to 5, wherein said snap coupling means (72) comprise a leg (84) and at least one pair of flexible flaps (88) configured to achieve a snap coupling with an outer side wall of said leg (84).

7. An underride guard (4) according to claim 6, wherein said flexible flaps (88) comprise a lead-in portion (92) having a smaller width and a stop portion (96) having a greater width, which are mutually contiguous.

8. An underride guard (4) according to claim 6 or 7, wherein said flexible flaps (88) each have a rear notch or slit (100) on the side opposite to the associable leg (84), to increase the flexibility thereof.

9. An underride guard (4) according to any one of claims 1 to 8, wherein the bracket (12) for the connection with the frame (16) comprises a plurality of adjustment holes or slots (18) for varying the position of the partition (20) with respect to the frame (16) in the vertical direction (Y-Y) and/or in the transverse direction (T-T), perpendicular to the longitudinal direction (X-X) and the vertical direction (Y-Y).

## Patentansprüche

1. Unterfahrschutz (4), umfassend:
- ein Paar Ständer (8), die entlang einer Vertikalrichtung (Y-Y) gerichtet werden, wobei jeder Ständer (8) mit mindestens einem Bügel (12) zur Verbindung mit einem Rahmen (16) eines zuordenbaren Fahrzeugs (6) versehen ist, wobei die Ständer (8) gegenseitig entlang einer Längsrichtung (X-X), die sich senkrecht zu der Vertikalrichtung (Y-Y) erstreckt, beabstandet sind,
- eine Trennwand (20), die sich parallel zu der Längsrichtung (X-X) erstreckt, auskragend zwischen dem Paar von Ständern (8), wobei die Trennwand (20) an jedem Ständer (8) mit einem vertikalen Schenkel (28) versehen ist, der mittels eines oberen Bolzens (32) an dem entsprechenden Ständer (8) an einem oberen Ende (36) des Ständers (8) selbst scharniert wird,
- wobei die Trennwand (20) zwischen einer Gebrauchs- oder Absenkstellung, in der jeder vertikale Schenkel (28) sich mindestens teilweise überlappt und parallel zu dem entsprechenden Ständer (8) ist, und einer Nichtgebrauch- oder Anhebeposition drehbar ist, in der jeder vertikale Schenkel (28) mit dem entsprechenden Ständer (8) einen Winkel (α) von mehr als 90° bildet,
- wobei jeder vertikale Schenkel (28) mit einem Zapfen (40) versehen ist, der parallel zu der Längsrichtung (X-X) ist
**dadurch gekennzeichnet, dass**
jeder Ständer (8) mit einem unteren Schlitz (44) und einer oberen Ausnehmung (48) versehen ist, die der unteren Schlitz (44) in Bezug auf den oberen Bolzen (32) gegenüberliegend angeordnet ist,
- wobei der untere Schlitz (44) eine kreisbogenförmige Gestalt in Bezug auf den oberen Bolzen (32) aufweist und bemessen wird, um den Zapfen (40) aufzunehmen und einen Endanschlag für die Drehung der Trennwand (20) in der Absenkstellung zu bilden,
- wobei die obere Ausnehmung (48) bemessen wird, um einen Anschlag für den Zapfen (40) in der Anhebeposition der Trennwand (20) bildet,
wobei der vertikale Schenkel (28) und der Ständer (8) an gegenseitigen unteren Enden (68) Schnappkupplungsmittel (72) aufweisen, die in Eingriff stehen, wenn sich die Trennwand (20) in der Gebrauchs- oder Absenkposition befindet.

2. Unterfahrschutz (4) nach Anspruch 1, wobei die obere Ausnehmung (48) um eine Exzentrizität in Bezug auf den oberen Bolzen (32) entlang einer Querrichtung (T-T), die sich senkrecht zu der Längsrichtung (X-X) und zu der Vertikalrichtung (Y-Y) erstreckt, versetzt ist, indem sie sich der Trennwand (20) annähert.

3. Unterfahrschutz (4) nach Anspruch 1 oder 2, wobei die obere Ausnehmung (48) oberhalb des oberen Bolzens (32) entlang der Vertikalrichtung (Y-Y) angeordnet ist.

4. Unterfahrschutz (4) nach Anspruch 1, 2 oder 3, wobei der obere Bolzen (32) an dem jeweiligen Ständer (8) befestigt wird und in einem oberen Schlitz (56) in Eingriff steht, der auf dem entsprechenden vertikalen Schenkel (28) erhalten wird, um eine Relativbewegung zwischen der Trennwand (20) und den Ständern (8) entlang des oberen Schlitzes (56) zu ermöglichen.

5. Unterfahrschutz (4) nach einem der Ansprüche 1 bis 4, wobei die Schnappkupplungsmittel (72) eine flexible Lasche (76) und einen Schlitz (80) umfassen, der eingerichtet ist, die flexible Lasche (76) in Kupplungsweise aufzunehmen.

6. Unterfahrschutz (4) nach einem der Ansprüche 1 bis 5, wobei die Schnappkupplungsmittel (72) einen Schenkel (84) und mindestens ein Paar flexibler Klappen (88) umfassen, die dazu konfiguriert sind, eine Schnappkupplung mit einer Außenwand des Schenkels (84) zu erhalten.

7. Unterfahrschutz (4) nach Anspruch 6, wobei die flexiblen Klappen (88) einen Einführabschnitt (92) aufweisend eine geringere Breite und einen Anschlagabschnitt (96) aufweisend eine größere Breite umfassen, die aneinander angrenzend sind

8. Unterfahrschutz (4) nach Anspruch 6 oder 7, wobei die flexiblen Klappen (88) jeweils eine rückseitige Kerbe oder einen rückseitigen Schlitz (100) an der dem zuordenbaren Schenkel (84) gegenüberliegenden Seite aufweisen, um deren Flexibilität zu erhöhen.

9. Unterfahrschutz (4) nach einem der Ansprüche 1 bis 8, wobei der Bügel (12) zur Verbindung mit dem Rahmen (16) eine Vielzahl von Einstellungsbohrungen oder -Schlitzen (18) umfasst, um die Position der Trennwand (20) in Bezug auf den Rahmen (16) in der Vertikalrichtung (Y-Y) und/oder in der Querrichtung (T-T), die sich senkrecht zu der Längsrichtung (X-X) und der Vertikalrichtung (Y-Y) erstreckt, zu ändern.

## Revendications

1. Un dispositif anti-encastrement (4) comprenant :
a pair de montants (8), dirigés selon une direction verticale (Y-Y), chaque montant (8) étant pourvu d'au moins un support (12) pour la connexion avec un châssis (16) d'un véhicule (6) associable, lesdits montants (8) étant mutuellement espacés dans une direction longitudinale (X-X), perpendiculaire à ladite direction verticale (Y-Y),
une cloison (20) s'étendant parallèlement à ladite direction longitudinale (X-X), en porte-à-faux entre ladite paire de montants (8), la cloison (20) étant pourvue, au niveau de chaque montant (8), d'une jambe verticale (28) articulée au montant correspondant (8) au moyen d'une broche supérieure (32), au niveau d'une extrémité supérieure (36) dudit montant (8),
la cloison (20) étant rotative entre une configuration d'utilisation ou abaissée, dans laquelle chaque jambe verticale (28) se superpose au moins partiellement et est parallèle au montant correspondant (8), et une configuration de non-utilisation ou relevée, dans laquelle chaque jambe verticale (28) définit, avec le montant correspondant (8), un angle (α) supérieur à 90°,
dans laquelle chaque jambe verticale (28) est pourvue d'un ergot (40) parallèle à ladite direction longitudinale (X-X)
**caractérisé en ce que**
chaque montant (8) est pourvu d'une fente inférieure (44) et d'un évidement supérieur (48) disposés en regard de la fente inférieure (44) par rapport à la broche supérieure (32),
dans laquelle la fente inférieure (44) a une forme d'arc de cercle par rapport à la broche supérieure (32) et est dimensionnée de manière à loger ledit ergot (40) et former une butée de fin de course pour la rotation de la cloison (20) en configuration abaissée,
dans laquelle l'évidement supérieur (48) est dimensionné de manière à former une butée pour l'ergot (40) en configuration relevée de la cloison (20),
dans laquelle la jambe verticale (28) et le montant (8), au niveau de leurs extrémités inférieures mutuelles (68), présentent des moyens d'encliquetage (72) qui sont engagés lorsque la cloison (20) est en position d'utilisation ou abaissée.

2. Un dispositif anti-encastrement (4) selon la revendication 1, dans lequel l'évidement supérieur (48) est désaxé d'une excentricité par rapport à la broche supérieure (32) selon une direction transversale (T-T), perpendiculaire à la direction longitudinale (X-X) et à la direction verticale (Y-Y), en s'approchant de la cloison (20).

3. Un dispositif anti-encastrement (4) selon la revendication 1 ou 2, dans lequel l'évidement supérieur (48) est disposé au-dessus de la broche supérieure (32), selon ladite direction verticale (Y-Y).

4. Un dispositif anti-encastrement (4) selon la revendication 1, 2 ou 3, dans lequel la broche supérieure (32) est fixée sur le montant respectif (8) et est engagée dans une fente supérieure (56) obtenue sur la jambe verticale correspondante (28) de manière à permettre un mouvement relatif entre la cloison (20) et les montants (8), le long de ladite fente supérieure (56).

5. Un dispositif anti-encastrement (4) selon l'une quelconque des revendications 1 à 4, dans lequel lesdits moyens d'encliquetage (72) comprennent une languette flexible (76) et une fente (80) adaptée à recevoir ladite languette flexible (76) en mode d'encliquetage.

6. Un dispositif anti-encastrement (4) selon l'une quelconque des revendications 1 à 5, dans lequel lesdits moyens d'encliquetage (72) comprennent une jambe (84) et au moins une paire de volets flexibles (88) configurés pour obtenir un encliquetage avec une paroi latérale externe de ladite jambe (84).

7. Un dispositif anti-encastrement (4) selon la revendication 6, dans lequel lesdits volets flexibles (88) comprennent une portion d'introduction (92) ayant une largeur moindre et une portion d'arrêt (96) ayant une largeur supérieure, qui sont mutuellement contiguës.

8. Un dispositif anti-encastrement (4) selon la revendication 6 ou 7, dans lequel lesdits volets flexibles (88) comportent chacun une encoche ou fente arrière (100) sur le côté opposé à la jambe (84) associable, afin d'en augmenter la flexibilité.

9. Un dispositif anti-encastrement (4) selon l'une quelconque des revendications 1 à 8, dans lequel le support (12) pour la connexion avec le châssis (16) comprend une pluralité de trous ou fentes de réglage (18) pour varier la position de la cloison (20) par rapport au châssis (16) dans la direction verticale (Y-Y) et/ou dans la direction transversale (T-T), perpendiculaire à la direction longitudinale (X-X) et à la direction verticale (Y-Y).
